(19) Europäisches Patentamt
European Patent Office
Office européen des brevets

(11) **EP 3 327 652 A1**

(12) **EUROPEAN PATENT APPLICATION**

(43) Date of publication:
**30.05.2018 Bulletin 2018/22**

(51) Int Cl.:
**G06Q 30/02** *(2012.01)* **G06Q 30/06** *(2012.01)*

(21) Application number: **17203539.6**

(22) Date of filing: **24.11.2017**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA MD**<br><br>(30) Priority: **25.11.2016 US 201615361096**<br><br>(71) Applicant: **Criteo SA**<br>**75009 Paris (FR)** | (72) Inventors:<br>• **VASILE, Flavian**<br>**75009 Paris (FR)**<br>• **CALAUZENES, Clement**<br>**75009 Paris (FR)**<br>• **TEODOSIU, Dan**<br>**92100 Boulogne-Billancourt (FR)**<br><br>(74) Representative: **O'Callaghan, Robert James**<br>**Elkington and Fife LLP**<br>**Prospect House**<br>**8 Pembroke Road**<br>**Sevenoaks, Kent TN13 1XR (GB)** |

(54) **AUTOMATIC SELECTION OF ITEMS FOR A COMPUTERIZED GRAPHICAL ADVERTISEMENT DISPLAY USING A COMPUTER-GENERATED MULTIDIMENSIONAL VECTOR SPACE**

(57)     A computer accesses a multidimensional vector space that comprises embeddings of catalog item embeddings, each catalog item having one or more item attributes and corresponding item attribute values, and embeddings of associated item attribute values. An identification of one or more seed catalog items is received. Embeddings of each of one or more seed catalog items and embeddings of associated item attribute values are identified within the vector space. For each one of the seed catalog items, for each of the item attributes of the seed catalog item, an item representation in the vector space is located based upon a combination of the embedding of the seed catalog item and of an embedding of an item attribute value representing an item attribute value that is similar to the corresponding item attribute value of the seed catalog item. For each item representation, one or more embeddings of candidate catalog items that are close to the product representation are selected. For each item representation, the seed catalog items and one or more candidate catalog items are selected for display.

**FIG. 1**

## Description

### TECHNICAL FIELD

The present technology relates to the selection of items for inclusion in a computerized graphical advertisement display, and, more particularly, to the automatic selection of items for inclusion in a computerized graphical advertisement display using a computer-generated multidimensional vector space.

### BACKGROUND

Publisher systems can provide webpages or other online content that can include one or more advertisement display opportunities for computerized graphical advertisement displays (e.g., space for a banner advertisement across the top of the webpage, within an application, or within other media such as videos or images) that include one or more items (e.g., consumer goods or products) that may be of interest to a viewer of the advertisement display. In some instances, when a user device (e.g., a computer running a web browser) processes a webpage for display, the user device can request, from an ad system, graphical display source code for a computerized graphical advertisement display for one of the advertisement display opportunities. The ad system can provide the graphical display source code to the user device to render and/or display.

In some systems, the computerized graphical advertisement display may include multiple items arranged in groups-such as multiple choices for a given product or a set of related products. However, the determination of which items to include in an advertisement display is limited and typically does not account for the ability to explore many different attributes of a given product to identify other products having similar attributes to include in the advertisement display to a particular user device, within a particular application, for a particular user.

### SUMMARY

Accordingly, there is a need for technology to dynamically and programmatically select a plurality of items for inclusion in a computerized graphical advertisement display. The technology described herein employs a computer-generated multidimensional vector space that contains embeddings for the items and for the attribute values of each item. The systems and methods described herein advantageously traverse the multidimensional vector space to identify representations of similar items in the vector space by performing transformations on the embeddings using attributes of a seed item, in order to select items for inclusion in the advertisement display that are close to the item representation.

In one aspect, there is a computer-implemented method of selecting a plurality of catalog items for display in a digital advertisement. The method comprises accessing a computer-generated multidimensional vector space, where the multidimensional vector space comprises embeddings of catalog items, each catalog item having one or more item attributes and corresponding item attribute values, and embeddings of associated item attribute values. The method comprises receiving an identification of one or more seed catalog items. The method comprises identifying an embedding of each of one or more seed catalog items representing the seed catalog items within the multidimensional vector space and embeddings of the associated item attribute values of each of the one or more seed catalog items. The method comprises locating for each of the one or more seed catalog items, for each of the item attributes of each seed catalog item, an item representation in the multidimensional vector space, based upon a combination of the embedding of the seed catalog item and of an embedding of an item attribute value representing an item attribute value that is similar to the corresponding item attribute value of the seed catalog item. The method comprises, for each item representation, selecting from the multidimensional vector space one or more embeddings of candidate catalog items that are close to the product representation. The method comprises, for each item representation, selecting for display one or more of the seed catalog items and one or more candidate catalog itemsbased upon the selected embeddings of the candidate catalog items.

The above aspect can include one or more of the following features. In some embodiments, the one or more item attributes comprise a color, a brand, and a memory size. In some embodiments, the seed catalog item and the candidate catalog items selected for display are displayed in a digital advertisement. In some embodiments, the seed catalog item and the candidate catalog items selected for display are arranged in the digital advertisement in a grid having a horizontal axis and a vertical axis, wherein the horizontal axis is associated with a change in a first item attribute value and the vertical axis is associated with a change in a second item attribute value. In some embodiments, the seed catalog item is displayed at the center of the grid and the at least one selected candidate catalog items are displayed around the seed catalog item.

In some embodiments, the seed catalog item and the candidate catalog items selected for display are arranged in the digital advertisement in a grid having a horizontal axis and a vertical axis, wherein the horizontal axis is associated with a change in an item attribute value and the vertical axis is associated with different item attributes. In some embodiments, the seed catalog item is displayed in a first row of the grid, the different item attributes are each identified below the seed catalog item in a different row of a leftmost column of the grid, and the at least one selected candidate catalog items are displayed in columns to the right of the leftmost column based upon a correspondence of their item attribute values to the different item attributes.

In some embodiments, the seed catalog item and the candidate catalog items selected for display are arranged in the digital advertisement in a grid having a horizontal axis associated with a change in an item attribute value. In some embodiments, the seed catalog item is displayed in a leftmost column of the grid and the at least one selected candidate catalog items are displayed in columns to the right of the leftmost column in a same row as the seed catalog item.

In some embodiments, the one or more embeddings of the candidate catalog items are selected from the multidimensional vector space based upon a distance between a location of the item representation in the multidimensional vector space and a location of the embedding of the candidate catalog item representing the candidate catalog item in the multidimensional vector space. In some embodiments, the distance comprises a translation between an item attribute value of the item representation and an item attribute value of the embedding of the candidate catalog item.

In some embodiments, the embeddings of the catalog items in the multidimensional vector space are associated with a single entity. In some embodiments, the method further comprises receiving a request for a digital advertisement from a user device, and providing to the user device a digital advertisement that includes the seed catalog item and the candidate catalog items selected for display.

In some embodiments, the method further comprises ranking the candidate catalog items selected for display. In some embodiments, the candidate catalog items selected for display are ranked based upon a distance.

In some embodiments, the item attribute value that is similar to the corresponding item attribute value of the seed catalog item is selected based upon a relative distance between the item attribute value of the seed catalog item and the item attribute value represented by the embedding of the item attribute value. In some embodiments, the embedding of the item attribute value representing an item attribute value that is similar to the corresponding item attribute value of the seed catalog item is based upon past user interactions with a digital advertisement displaying the seed catalog item. In some embodiments, the past user interactions comprise one or more of: a view, a search, a click, and a conversion. In some embodiments, the embedding of the item attribute value representing an item attribute value that is similar to the corresponding item attribute value of the seed catalog item is based upon item attributes of one or more other catalog items. In some embodiments, the item attributes of the one or more other catalog items comprise one or more of: a color, a brand, a price range, a memory size, a storage capacity, a display resolution, a screen size, and a camera resolution.

Other aspects and advantages of the present technology will become apparent from the following detailed description, taken in conjunction with the accompanying drawings, illustrating the principles of the technology by way of example only.

**BRIEF DESCRIPTION OF THE DRAWINGS**

The foregoing and other objects, features, and advantages of the present technology, as well as the technology itself, will be more fully understood from the following description of various embodiments, when read together with the accompanying drawings, in which:

FIG. 1 is a diagram of a networked system in accordance with embodiments of the technology.
FIG. 2 depicts a flow chart for the automatic selection of items for inclusion in a computerized graphical advertisement display using a computer-generated multidimensional vector space.
FIG. 3 is a diagram of an exemplary multidimensional vector space in accordance with embodiments of the technology.
FIG. 4 depicts a first exemplary computerized graphical advertisement display using products selected by traversing the multidimensional vector space.
FIG. 5 depicts a second exemplary computerized graphical advertisement display using products selected by traversing the multidimensional vector space.
FIG. 6 depicts a third exemplary computerized graphical advertisement display using products selected by traversing the multidimensional vector space.

**DETAILED DESCRIPTION**

The present technology provides systems and methods for the computerized selection of items for inclusion in a computerized graphical advertisement display. In some embodiments, the technology described herein can improve computerized graphical advertisement displays by using a complex, multidimensional vector space comprising a plurality of embeddings, with which the computer system can explore the item attributes to generate graphical displays source code with a diverse array of items for presentation to a user, where the items have similar item attributes so that the user can quickly and efficiently identify a potential interest in an item prior to interacting with the graphical advertisement display. Beneficially, the technology can programmatically generate varied arrangements of seed items and candidate items in the computerized graphical advertisement display using the different item attributes and their corresponding values.

Although the technology is illustrated and described herein with reference to specific embodiments, the technology is not intended to be limited to the details shown. Various modifications can be made in the details within the scope the claims and without departing from the technology.

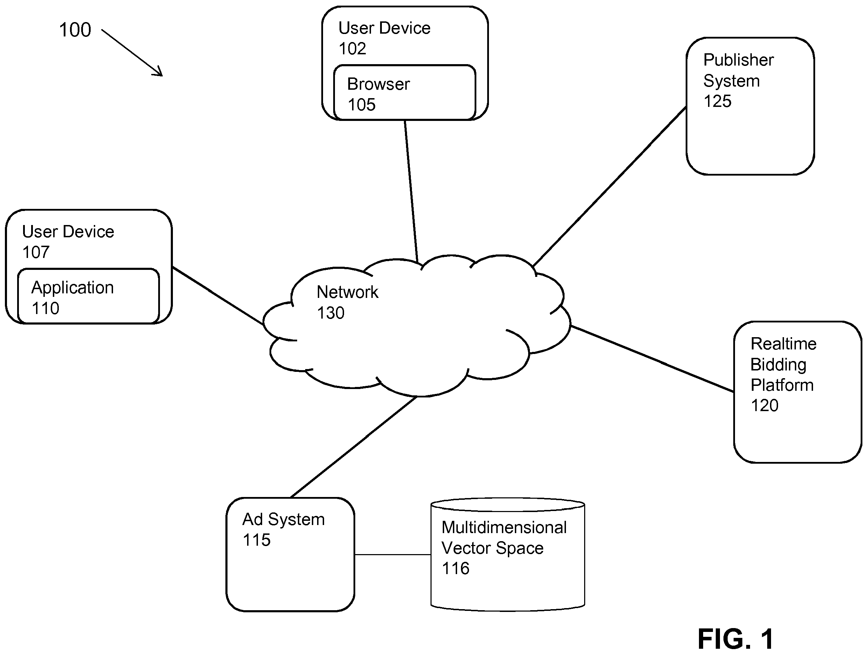

FIG. 1 is a diagram of networked system 100 in accordance with embodiments of the technology. As illustrated, networked system 100 can include user device 102, user device 107, ad system 115, realtime bidding ("RTB") platform 120, and publisher system 125. User device 102, user device 107, ad system 115, RTB platform 120, and publisher system 125 can be in data communication via network 130. User devices 102 and 107 can each be any computing devices. In some embodiments, user devices 102 and 107 can each be one of a mobile computing device (e.g., cellular phones and/or tablets), a PC, or other computing device. User device 102 executes web browser 105. User device 107 executes application 110 (e.g., a mobile application that interacts with online content).

Ad system 115 can be any computing device, such as a server or multiple servers. In some embodiments, ad system 115 can collect behavioral data for a plurality of devices, browsers, and/or applications. In some embodiments, ad system 115 can receive behavioral data for a plurality of devices, browsers, and/or applications from third-parties. In some embodiments, ad system 115 can provide graphical display source code for a computerized graphical advertisement display in accordance with the present technology. Ad system 115 is coupled to, e.g., a database that comprises a multidimensional vector space 116 that will be described in greater detail below.

RTB platform 120 can be any computing device, such as a server or multiple servers. In some embodiments, RTB platform 120 can perform auctions for advertising display opportunities in online media, such as webpages or application content served by publisher system 125, that are provided to user devices 102 and/or 107. Ad system 115 can submit bids for such advertising opportunities, and if ad system 115 wins the auction, ad system 115 can provide source code or other display data for a computerized graphical advertisement display to fill the advertising display opportunity. Publisher system 125 can be any computing device, such as a server or multiple servers. In some embodiments, publisher system 125 can serve webpages to browser 105. In some embodiments, publisher system 125 can serve other content to application 110. In some embodiments, publisher system 125 can communicate with ad system 115 to determine whether ad system 115 will provide source code for a computerized graphical advertisement display to fill an advertisement display opportunity in a webpage or application content. Network 130 can be any network or multiple networks. For example, network 140 can include cellular networks through which user devices 102 and 107 are connected and the Internet.

The present technology provides systems and methods for the computerized selection of items for inclusion in a computerized graphical advertisement display based on the traversal of a computer-generated multidimensional vector space. Generally, a multidimensional vector space as described herein is a computer-generated model that comprises a plurality of embeddings corresponding to both items and the attribute values of the items. Within the vector space, items with similar attributes are positioned closer to each other than to items with dissimilar attributes.

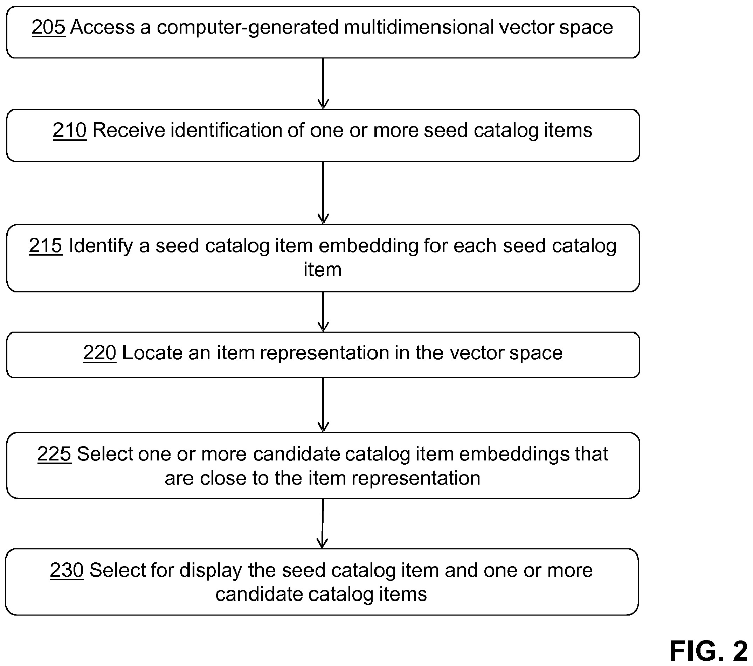

FIG. 2 is a flow diagram of a method of automatically selecting items for inclusion in a computerized graphical advertisement display, using the system 100 of FIG. 1. An ad system (e.g., ad system 115) receives a request for graphical display source code for a computerized graphical advertisement display. The request can be received from a browser or other application executing on a user device (e.g., browser 105 on user device 102). At step 205, the ad system accesses the computer-generated multidimensional vector space, which as described above comprises catalog item embeddings and item attribute value embeddings. In some embodiments, the data structures that comprise the multidimensional vector space are generated and stored prior to the receipt of the request for graphical display source code so that the ad system can simply access the vector space as described herein.

At step 210, the ad system receives an identification of one or more seed catalog items. For example, the ad system can retrieve an identification of one or more seed catalog items from, e.g., a database that contains advertisement information relating to items that may be of interest to a particular user or are associated with an ad buyer. For instance, the seed catalog items can be identified by the ad system based upon prior interactions between the ad system and a user to whom the graphical advertisement display is being presented.

In some embodiments, the request for graphical display source code received by the ad system contains an identifier or other similar type of data element that the ad system uses to identify a seed catalog item in the database. The seed catalog item is associated with one or more item attributes, and each item attribute of the seed catalog item has a corresponding value. For example, if the seed catalog item is a smartphone, the item can have item attributes of color, brand, memory size, and so forth. Each of those item attributes can have a corresponding value (e.g., color=white, brand=Apple, memory size=32GB). It should be appreciated that one or more data structures in the database can be configured to store the item attributes and corresponding item attribute values for the seed catalog item.

At step 215, the ad system identifies a seed catalog item embedding within the multidimensional vector space that represents the seed catalog item. As mentioned above, a representation of each catalog item (e.g., from a catalog of items associated with a particular advertiser) is embedded in the multidimensional vector space, and the item attributes and corresponding item attribute values are similarly embedded, to create a seed catalog item embedding. The ad system identifies a location of the seed catalog item embedding within the multidimensional vector space, to be used as a starting point for exploring the vector space to find other catalog item embeddings (also called candidate catalog item embeddings) that may share one or more similar attributes with the seed catalog item.

At step 220, the ad system locates an item representation disposed within the multidimensional vector space for each item attribute of the seed catalog item. The ad system locates the product representation(s) based upon a transformation of the seed catalog item embedding using an item attribute value embedding representing an item attribute value similar to the item attribute value of the seed catalog item. In one embodiment, for a given item attribute A, the ad system performs the transformation to explore the multidimensional vector space by:

a) finding the closest item attribute values for attribute A by computing a cosine similarity of the item attribute value *a* for attribute A with all attribute values and returning one of the closest values *a'*;

b) translating the vector *p* of the seed catalog item embedding in the neighborhood of catalog item embeddings that have a value *a'* for the same item attribute by adding the vector of the difference between the new attribute value *a'* and the old attribute value *a*:

$$p' = p + (a' - a)$$

and c) finding the closest catalog item embedding *p"* to *p'* by computing a cosine similarity of *p'* with all products.

It should be appreciated that the computation of a cosine similarity as set forth above is an example of determining the similarity, and other methodologies for determining the similarity can be used within the scope of the invention presented herein.

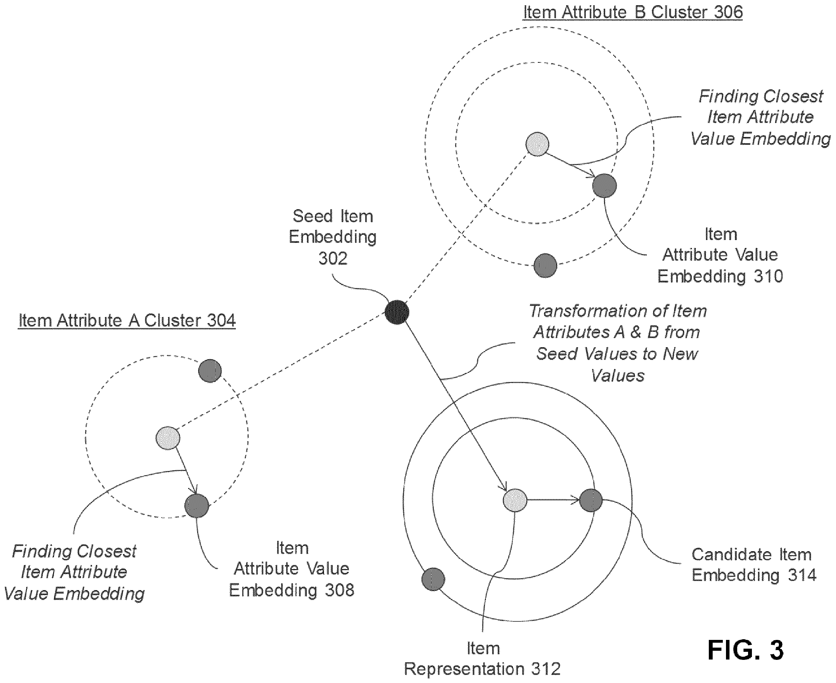

FIG. 3 is a diagram of an exemplary multidimensional vector space comprising a plurality of item embeddings and item attribute value embeddings. It should be appreciated that the vector space is typically comprised of several dimensions (e.g., more than two). The vector space is shown in FIG. 3 as a two-dimensional space due to the inherent limitation on graphically depicting a vector space having more than two dimensions. Furthermore, it should be understood that the methods and systems described herein rely on a computer to generate the multidimensional vector space with several dimensions at least because such an operation would practically be impossible for a human to perform without the use of a computer.

As shown in FIG. 3, the vector space comprises a seed item embedding 302 and a plurality of attribute clusters 304, 306 that include other item embeddings that have at least one attribute that is similar to an attribute of the seed item embedding 302. In one embodiment, the seed item embedding 302 represents a catalog item (e.g., a product) that an ad system selects for inclusion in a graphical advertisement based upon, e.g., information about a user who will view the advertisement. For example, the seed catalog item can be a smartphone with a plurality of item attributes and corresponding item attribute values, such as:

| Item Attribute | Item Attribute Value |
|----------------|----------------------|
| Brand          | Apple                |
| Color          | White                |
| Memory         | 32GB                 |

The seed catalog item is represented in the multidimensional vector space as, e.g., seed item embedding 302. For each item attribute, the ad system explores the multidimensional vector space in order to find item embeddings whose item attribute values are close to the item attribute value of the seed item embedding. As shown in FIG. 3, the ad system explores the vector space for each item attribute by finding the closest item attribute value embedding (e.g., item attribute value embeddings 308, 310) to the seed item attribute value. The ad system transforms the seed item embedding vector using, e.g., the vector of the difference between the difference between the new attribute value and the seed attribute value for each item attribute. The ad system thereby locates an item representation (e.g., representation 312) within the vector space and searches around the item representation to find the closest catalog item embedding(s) (e.g., candidate item embedding 314).

In some embodiments, the ad system selects the item attributes of the candidate catalog item embeddings based upon user preferences, e.g. information learned about the user (such as past user interactions with the seed catalog item), and so forth. For example, the ad system determines that the user has viewed the seed catalog item in a past advertisement or that the user has clicked on the seed catalog item in a past advertisement, or purchased the seed catalog item after interacting with a past advertisement. In some embodiments, the item attributes of the candidate catalog item embedding are selected based upon item attributes of one or more other catalog items. For example, the ad system can determine that a user has certain preferences (e.g., the user is price-conscious or that he chooses products based on color) so the ad system can select item attributes of the candidate catalog item embeddings that take the user preferences into account. In another example, the ad system can determine that a user has previously interacted with a particular catalog item (e.g., initiated a click on a digital advertisement with a particular catalog item having certain item attributes)

Turning back to FIG. 2, at step 225 the ad system selects one or more of these catalog item embeddings that are close to the product representation as candidate catalog item embeddings. The ad system retrieves advertisement information (e.g., item information, images, and so forth) relating to the seed catalog item represented by the seed catalog item embedding, and the ad system retrieves advertisement information relating to the catalog items represented by the selected candidate catalog item embeddings. At step 230, the ad system aggregates the information for the seed catalog item and the candidate catalog items in order to generate graphical display source code for the graphical advertisement display.

In some embodiments, the ad system ranks the candidate catalog items prior to generating a graphical advertisement display for presentation to a user on a remote device. The ranking function serves to limit the number of candidate catalog items that are used in the graphical advertisement display. For each item attribute, the ad system determines a list of maximum candidate items (e.g., multiplying the number of new item attribute values by the number of similar items per value) and returns an ordered list of candidate items that have a minimum similarity with the seed catalog item (e.g., based upon a predetermined threshold). It should be appreciated that other methods of ranking the candidate catalog items are within the scope of invention.

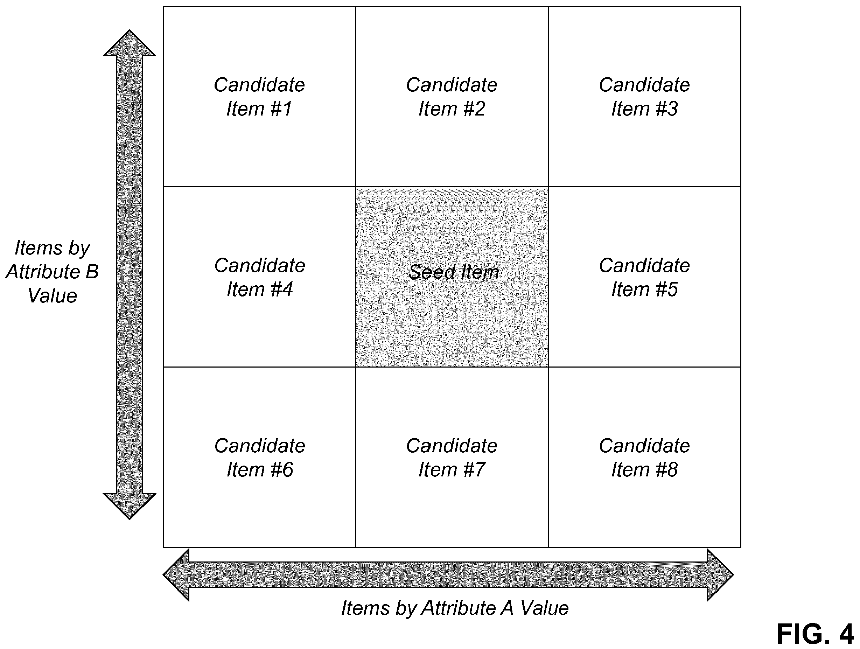

When the ad system has aggregated the seed catalog item and the candidate catalog items, the ad system generates a graphical advertisement display using the aggregated items. FIG. 4 is a diagram of a first exemplary graphical advertisement display that incorporates the seed catalog item and selected candidate catalog items for diversity in two different item attributes. As shown in FIG. 4, the seed catalog item is displayed in the middle cell of a 3x3 grid with the candidate catalog items displayed in the cells around the seed catalog item. The candidate catalog items are arranged according to their attribute values so that a horizontal axis of the grid corresponds to a first attribute and a vertical axis of the grid corresponds to a second attribute, with the values of the corresponding attributes changing based upon the item's position in the grid.

For example, in one embodiment the seed catalog item is a smartphone with a first attribute (i.e., Attribute A) of color=white and a second attribute (i.e., Attribute B) of brand=Apple. The horizontal axis is associated with the color attribute and the vertical axis is associated with the brand attribute. The candidate catalog items that are displayed in the cells in the same row as the seed catalog item (candidate catalog items #4 and #5) share the same brand attribute value as the seed catalog item but have a different value for the color attribute. Continuing with this example, the candidate catalog item #4 is a smartphone with color=black and brand=Apple while the candidate catalog item #5 is a smartphone with color=gold and brand=Apple.

Similarly, the candidate catalog items displayed in the cells in the same column as the seed catalog item (candidate catalog items #2 and #7) share the same color attribute value as the seed catalog item but have a different value for the brand attribute. For example, the candidate catalog item #2 is a smartphone with color=white and brand=Samsung while the candidate catalog item #7 is a smartphone with color=white and brand=LG.

Thus, it should be appreciated that the attribute values for the remaining candidate catalog items #1, #3, #6, and #8 displayed in the grid share the same color attribute value as the candidate items in the same row and share the same brand attribute value as the candidate items in the same column. For example:

- The candidate catalog item #1 is a smartphone with color=black and brand=Samsung;
- The candidate catalog item #3 is a smartphone with color=gold and brand=Samsung;
- The candidate catalog item #6 is a smartphone with color=black and brand=LG; and
- The candidate catalog item #8 is a smartphone with color=gold and brand=LG.

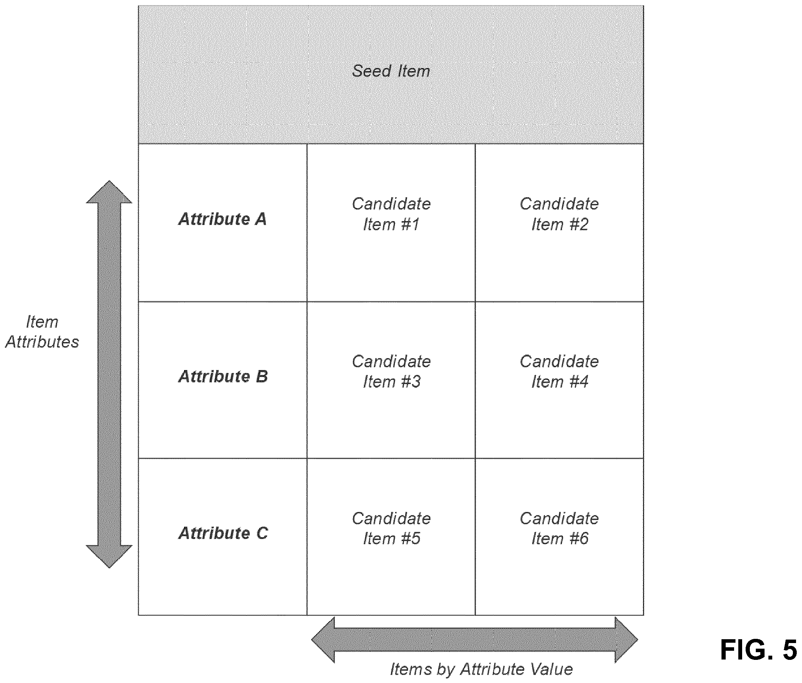

FIG. 5 is a second exemplary graphical advertisement display that incorporates the seed catalog item and selected candidate catalog items for diversity in three different item attributes. As shown in FIG. 5, the seed catalog item is displayed in a banner section above a 3x3 grid that contains the item attributes and the candidate catalog items. It should be appreciated that, in some embodiments, multiple similar seed catalog items can be displayed in the banner section. The first column of the 3x3 grid displays an identification of the specific item attribute assigned to the corresponding row of the grid, and the item attributes change across the vertical axis of the grid. The candidate catalog items are arranged in each row so that the value of the item attribute assigned to that row changes horizontally across the row.

For example, in one embodiment the seed catalog item is a smartphone with a first attribute (i.e., Attribute A) of color=white, a second attribute (i.e., Attribute B) of brand=Apple, and a third attribute (i.e., Attribute C) of memory size=32GB. The leftmost cell in each row of the 3x3 grid includes a description of the item attribute assigned to that row (i.e., Color for row 1, Brand for row 2, and Memory Size for row 3). The candidate catalog items in each row each share the same item attribute value as the seed catalog item for one of the item attributes but have a different item attribute value than the seed catalog item for the item attribute assigned to the row.

For example, the candidate catalog item #1 is a smartphone with brand=Apple and color=black, and the candidate catalog item #2 is a smartphone with brand=Apple and color=gold. Similarly, the candidate catalog item #3 is a smartphone with brand=Samsung and color=white and the candidate catalog item #4 is a smartphone with brand=LG and color=white. Finally, the candidate catalog item #5 is a smartphone with brand=Apple and memory size=16GB and the candidate catalog item #6 is a smartphone with brand=Apple and memory size=64GB.

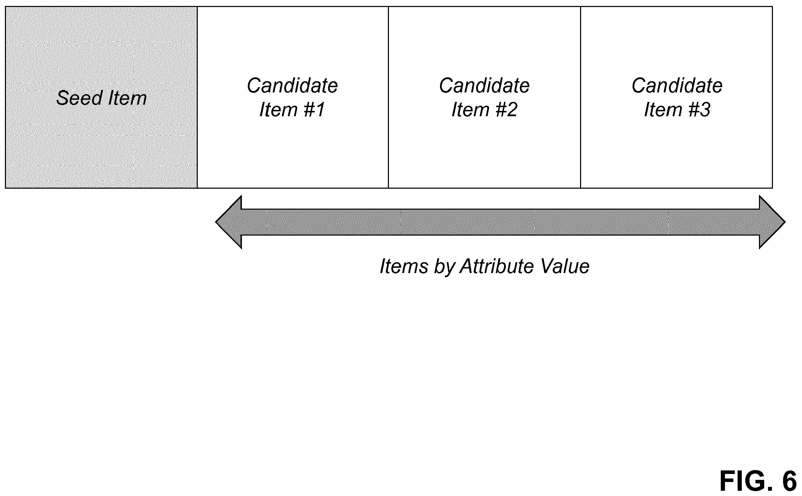

FIG. 6 is a third exemplary graphical advertisement display that incorporates the seed catalog item and selected candidate catalog items for diversity in one item attribute. As shown in FIG. 6, the seed catalog item is displayed in the leftmost cell of a 1x4 grid, and the three cells to the right of the seed catalog item contain the selected candidate catalog items. The candidate catalog items are arranged so that the item attribute value changes horizontally across the row.

For example, in one embodiment the seed catalog item is a smartphone with a first attribute of color=white, a second attribute of brand=Apple, and a third attribute of memory size=32GB. The candidate catalog items to the right of the seed catalog item share the same item attribute value as the seed catalog item for two of the item attributes but have a different item attribute value than the seed catalog item for the remaining item attribute.

For example:

- The candidate catalog item #1 is a smartphone with brand=Apple, color=white, and memory size=16GB;
- The candidate catalog item #2 is a smartphone with brand=Apple, color=white, and memory size=64GB; and
- The candidate catalog item #3 is a smartphone with brand=Apple, color=white, and memory size=128GB.

As described above, the graphical advertisement displays depicted in FIGS. 4, 5 and 6 each advantageously includes catalog items that are similar to each other but include a diversity of item attributes so that a user viewing the graphical advertisement display sees a spectrum of available options for a given seed product-which enhances the user's ability to make a shopping decision before interacting with the advertisement display. It should further be appreciated that other layouts and configurations of graphical advertisement displays are within the scope of invention, and can be implemented using the techniques described herein.

The above-described techniques can be implemented in digital electronic circuitry, or in computer hardware, firmware, software, or in combinations of them. The implementation can be as a computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. A computer program can be written in any form of programming language, including compiled or interpreted languages, and it can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps can be performed by one or more programmable processors executing a computer program to perform functions of the technology by operating on input data and generating output. Method steps can also be performed by, and apparatus can be implemented as, special purpose logic circuitry, e.g., an FPGA (field programmable gate array) or an ASIC (application specific- integrated circuit). Modules can refer to portions of the computer program and/or the processor/special circuitry that implements that functionality.

Processors suitable for the execution of a computer program include, by way of example, both general and special purpose microprocessors, and any one or more processors of any kind of digital computer. Generally, a processor receives instructions and data from a read-only memory or a random access memory or both. The essential elements of a computer are a processor for executing instructions and one or more memory devices for storing instructions and data. Generally, a computer also includes, or be operatively coupled to receive data from or transfer data to, or both, one or more mass storage devices for storing data, e.g., magnetic, magneto-optical disks, or optical disks. Data transmission and instructions can also occur over a communications network. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

To provide for interaction with a user, the above described techniques can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer (e.g., interact with a user interface element). Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

The above described techniques can be implemented in a distributed computing system that includes a back-end component, e.g., as a data server, and/or a middleware component, e.g., an application server, and/or a front-end component, e.g., a client computer having a graphical user interface and/or a Web browser through which a user can interact with an example implementation, or any combination of such back-end, middleware, or front-end components. The components of the system can be interconnected by any form or medium of digital data communication, e.g., a communication network. Examples of communication networks include a local area network ("LAN") and a wide area network ("WAN"), e.g., the Internet, and include both wired and wireless networks.

The computing system can include clients and servers. A client and server are generally remote from each other and typically interact through a communication network. The relationship of client and server arises by virtue of computer programs running on the respective computers and having a client-server relationship to each other.

The technology has been described in terms of particular embodiments. The alternatives described herein are examples for illustration only and not to limit the alternatives in any way. The steps of the technology can be performed in a different order and still achieve desirable results. Other embodiments are within the scope of the following claims.

## Claims

1.  A computer-implemented method of selecting a plurality of catalog items for display in a digital advertisement, the method comprising:

    accessing a computer-generated multidimensional vector space, wherein the multidimensional vector space comprises:

    embeddings of catalog items, each catalog item having one or more item attributes and associated item attribute values, and embeddings of the associated item attribute values;

    receiving an identification of one or more seed catalog items;
    identifying an embedding of each of one or more seed catalog items representing the seed catalog items within the multidimensional vector space and embeddings of the associated item attribute values of each of the one or more seed catalog items;
    for each of the one or more seed catalog items, locating for each of the item attributes of the seed catalog item, an item representation in the multidimensional vector space, based upon a combination of the embedding of the seed catalog item and of an embedding of an item attribute value representing an item attribute value that is similar to the corresponding item attribute value of the seed catalog item;
    for each item representation:

    selecting from the multidimensional vector space one or more embeddings of candidate catalog items that are close to the item representation; and
    selecting for display at least one of the seed catalog items and one or more candidate catalog items based upon the selected embeddings of the candidate catalog items.

2.  The method of claim 1, wherein the seed catalog item and candidate catalog items selected for display are displayed in a digital advertisement.

3.  The method of claim 2, wherein the seed catalog item and the candidate catalog items selected for display are arranged in the digital advertisement in a grid having a horizontal axis and a vertical axis, wherein the horizontal axis is associated with a change in a first item attribute value and the vertical axis is associated with a change in a second item attribute value, and preferably wherein the seed catalog item is displayed at the center of the grid and the at least one selected candidate catalog items are displayed around the seed catalog item.

4.  The method of claim 2, wherein the seed catalog item and the candidate catalog items selected for display are arranged in the digital advertisement in a grid having a horizontal axis and a vertical axis, wherein the horizontal axis is associated with a change in an item attribute value and the vertical axis is associated with different item attributes, and preferably wherein the seed catalog item is displayed in a first row of the grid, the different item attributes are each identified below the seed catalog item in a different row of a leftmost column of the grid, and the at least one selected candidate catalog items are displayed in columns to the right of the leftmost column based upon a correspondence of their item attribute values to the different item attributes.

5.  The method of claim 2, wherein the seed catalog item and the candidate catalog items selected for display are arranged in the digital advertisement in a grid having a horizontal axis associated with a change in an item attribute value, and preferably wherein the seed catalog item is displayed in a leftmost column of the grid and the at least one selected candidate catalog items are displayed in columns to the right of the leftmost column in a same row as the seed catalog item.

6.  The method of claim 2, wherein the seed catalog item and the candidate catalog items selected for display are arranged in the digital advertisement in a grid having a vertical axis associated with a change in an item attribute value.

**7.** The method of claim 6, wherein the seed catalog item is displayed in a topmost row of the grid and the at least one selected candidate catalog items are displayed in rows below the topmost row in a same column as the seed catalog item.

**8.** The method of any preceding claim, wherein the one or more item attributes comprise one or more of: a color, a brand, a price range, a memory size, a storage capacity, a display resolution, a screen size, and a camera resolution.

**9.** The method of any preceding claim, wherein the one or more embeddings of the candidate catalog items are selected from the multidimensional vector space based upon a distance between a location of the item representation in the multidimensional vector space and a location of the embedding of the candidate catalog item representing the candidate catalog item in the multidimensional vector space, and preferably wherein the distance comprises a translation between an item attribute value of the item representation and an item attribute value of the embedding of the candidate catalog item.

**10.** The method of any preceding claim, wherein the embeddings of the catalog items in the multidimensional vector space are associated with a single entity.

**11.** The method of any preceding claim, further comprising

receiving a request for a digital advertisement from a user device; and
providing to the user device a digital advertisement that includes the seed catalog item and the candidate catalog items selected for display.

**12.** The method of any preceding claim, further comprising ranking the candidate catalog items selected for display, and preferably wherein the candidate catalog items selected for display are ranked based upon a distance.

**13.** The method of any preceding claim, wherein the item attribute value that is similar to the corresponding item attribute value of the seed catalog item is selected based upon a relative distance between the item attribute value of the seed catalog item and the item attribute value represented by the embedding of the item attribute value.

**14.** The method of any preceding claim, wherein the embedding of the item attribute value representing an item attribute value that is similar to the corresponding item attribute value of the seed catalog item is based upon past user interactions with a digital advertisement displaying the seed catalog item, and preferably wherein the past user interactions comprise one or more of: a view, a search, a click, and a conversion.

**15.** The method of any preceding claim, wherein the embedding of the item attribute representing an item attribute value that is similar to the corresponding item attribute value of the seed catalog item is based upon item attributes of one or more other catalog items, and preferably wherein the item attributes of the one or more other catalog items comprise one or more of: a color, a brand, a price range, a memory size, a storage capacity, a display resolution, a screen size, and a camera resolution.

FIG. 1

```
205 Access a computer-generated multidimensional vector space
```

↓

```
210 Receive identification of one or more seed catalog items
```

↓

```
215 Identify a seed catalog item embedding for each seed catalog
item
```

↓

```
220 Locate an item representation in the vector space
```

↓

```
225 Select one or more candidate catalog item embeddings that
are close to the item representation
```

↓

```
230 Select for display the seed catalog item and one or more
candidate catalog items
```

**FIG. 2**

EP 3 327 652 A1

Item Attribute B Cluster 306

Finding Closest
Item Attribute
Value Embedding

Seed Item
Embedding
302

Item
Attribute Value
Embedding 310

Item Attribute A Cluster 304

Transformation of Item
Attributes A & B from
Seed Values to New
Values

Finding Closest
Item Attribute
Value Embedding

Item
Attribute Value
Embedding 308

Candidate Item
Embedding 314

Item
Representation 312

FIG. 3

| | | |
|---|---|---|
| Candidate Item #1 | Candidate Item #2 | Candidate Item #3 |
| Candidate Item #4 | Seed Item | Candidate Item #5 |
| Candidate Item #6 | Candidate Item #7 | Candidate Item #8 |

*Items by Attribute B Value*

*Items by Attribute A Value*

**FIG. 4**

| Seed Item | | |
|---|---|---|
| **Attribute A** | Candidate Item #1 | Candidate Item #2 |
| **Attribute B** | Candidate Item #3 | Candidate Item #4 |
| **Attribute C** | Candidate Item #5 | Candidate Item #6 |

*Item Attributes*

*Items by Attribute Value*

**FIG. 5**

Seed Item | Candidate Item #1 | Candidate Item #2 | Candidate Item #3

Items by Attribute Value

FIG. 6

Europäisches
Patentamt

European
Patent Office

Office européen
des brevets

## EUROPEAN SEARCH REPORT

Application Number

EP 17 20 3539

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/212362 A1 (DONSBACH AARON M [US] ET AL) 21 September 2006 (2006-09-21) * abstract; figure 1 * * paragraphs [0036], [0037], [0041], [0042], [0048] - [0051], [0073], [0080] * | 1-15 | INV. G06Q30/02 G06Q30/06 |
| X | US 8 660 912 B1 (DANDEKAR PRANAV [US]) 25 February 2014 (2014-02-25) * abstract; claims 1-20; figures 1,3 * * column 7, line 66 - column 10, line 3 * | 1-15 | |

TECHNICAL FIELDS SEARCHED (IPC)

G06Q

The present search report has been drawn up for all claims

| Place of search | Date of completion of the search | Examiner |
|---|---|---|
| The Hague | 21 December 2017 | Berlea, Alexandru |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 20 3539

This annex lists the patent family members relating to the patent documents cited in the above-mentioned European search report.
The members are as contained in the European Patent Office EDP file on
The European Patent Office is in no way liable for these particulars which are merely given for the purpose of information.

21-12-2017

| Patent document cited in search report | | Publication date | Patent family member(s) | | Publication date |
|---|---|---|---|---|---|
| US 2006212362 | A1 | 21-09-2006 | CA 2595160 | A1 | 27-07-2006 |
| | | | CN 101124600 | A | 13-02-2008 |
| | | | EP 1846902 | A2 | 24-10-2007 |
| | | | JP 4787847 | B2 | 05-10-2011 |
| | | | JP 2008529137 | A | 31-07-2008 |
| | | | KR 20080005181 | A | 10-01-2008 |
| | | | KR 20100039903 | A | 16-04-2010 |
| | | | US 2006167757 | A1 | 27-07-2006 |
| | | | US 2006212362 | A1 | 21-09-2006 |
| | | | WO 2006079008 | A2 | 27-07-2006 |
| US 8660912 | B1 | 25-02-2014 | NONE | | |

EPO FORM P0459

For more details about this annex : see Official Journal of the European Patent Office, No. 12/82